# EUROPÄISCHE PATENTSCHRIFT

(11) **EP 2 209 125 B1**
(45) Veröffentlichungstag und Bekanntmachung des Hinweises auf die Patenterteilung: **15.05.2013**
(21) Anmeldenummer: 09179568.2
(22) Anmeldetag: 17.12.2009
(51) Int. Cl.: G21C 19/07, G21C 19/06, G21F 7/00

(54) **Lagergestellanordnung zur Lagerung nuklearer Brennelemente**
Storage rack assembly for storing nuclear fuel elements
Assemblage des châssis de stockage destiné au stockage d'éléments de combustion nucléaires

(30) Priorität: 09.01.2009 EP 09150337
(43) Veröffentlichungstag der Anmeldung: 21.07.2010
(73) Patentinhaber: CCI AG, 8404 Winterthur (CH)
(72) Erfinder: Kielbowicz, Stanislaw, 8820 Wädenswil (CH)
(74) Vertreter: Schmidtchen, Jürgen Christian

(56) Entgegenhaltungen:
- EP-A- 0 028 010
- EP-A- 0 537 615
- DE-A1- 19 829 295
- US-A- 4 348 352

## Beschreibung

Die Erfindung betrifft eine Lagergestellanordnung zum Lagern nuklearer Brennelemente gemäss Oberbegriff von Anspruch 1.

Nukleare Brennelemente und insbesondere abgebrannte nukleare Brennelement werden in Lagerbecken gelagert, die mit einem Kühlmittel wie beispielsweise Wasser gefüllt sind, das zugleich als Abschirmung gegen die Strahlung der Brennelemente dient. Die abgebrannten nuklearen Brennelemente verbleiben solange im Lagerbecken, bis sie der Wiederaufbereitung oder fallweise Endlagerung zugeführt werden. Zur sicheren Lagerung der nuklearen Brennelemente wurden Lagergestelle entwickelt, wobei ein Lagerbecken mehrere Lagergestelle aufnehmen kann, die nebeneinander und fallweise auch übereinander angeordnet sein können.

Aus Dokument DE 29 30 237 A1 ist ein Lagergestell zur Lagerung nuklearer Brennelemente bekannt, das mehrere vertikale Schächte oder Kanäle zur Aufnahme der Brennelemente enthält, wobei die Wandungen der Kanäle aus übereinander angeordneten Blechstreifen gebildet sind. Die Blechstreifen sind an ihren unteren und oberen Rändern mit Einschnitten versehen, mittels welchen die kreuzweise ineinander gesteckten Blechstreifen gegenseitig gehalten sind. Die Blechstreifen sind zwischen einer oberen Gitterplatte und einer unteren Gitterplatte angeordnet, die durch Streben verbunden sind. In dem beschriebenen Lagergestell sind die Kanäle und die Brennelemente auf der unteren Gitterplatte abgestützt.

In Dokument US 4 042 828 ist ein weiteres Lagergestell zur Lagerung nuklearer Brennelemente in einem Lagebecken beschrieben. Das Lagergestell enthält mehrere, aneinandergereihte vertikale Umhüllungen, die Kanäle zur Aufnahme der Brennelemente bilden. Die Umhüllungen, die einen quadratischen Querschnitt aufweisen, sind in einem offenen Gestellrahmen angeordnet und am unteren und oberen Ende offen, so dass das im Lagerbecken enthaltene Wasser in den Umhüllungen zirkulieren kann, um die Brennelemente zu kühlen. Die in die Umhüllungen eingesetzten Brennelemente sind über Auflagen einzeln auf dem Boden des Lagerbeckens abgestützt.

Es hat sich gezeigt, dass die oben beschriebenen Lagergestelle aus dem Stand der Technik die Anforderungen an eine sichere Lagerung der Brennelement nur bedingt erfüllen, indem insbesondere während Erdbeben merkliche Verschiebungen der Lagergestelle in den Lagerbecken festgestellt wurden. Ein voll mit Brennelementen beladenes Lagergestell hat typisch ein Gewicht zwischen 30 t und 60 t, so dass die Kräfte, die während eines Erdbebens zwischen benachbarten Lagergestellen und zwischen den Lagergestellen und den Wänden des Lagerbeckens auftreten, erheblich sind und die Gefahr besteht, dass die Lagergestelle und die darin gelagerten Brennelemente und/oder die Auskleidung des Lagerbeckens während eines Erdbebens beschädigt werden, und dass dabei Radionuklide freigesetzt werden können.

Die Figuren 9, 13 und 14 aus dem oben genannten Dokument US 4 042 828 zeigen Halteklammern, mittels welchen nebeneinander liegende Lagergestelle verbunden werden können. Durch eine Verbindung der Lagergestelle kann während eines Erdbebens eine Verschiebung zwischen den Lagergestellen zumindest im Prinzip vermieden werden. Die Konstruktionsweise der im genannten Dokument beschriebenen Lagergestelle erscheint jedoch ungeeignet, um grössere Horizontalkräfte aufzunehmen, so dass die Erdbebensicherheit mittels der Halteklammern nur beschränkt erhöht werden kann.

Um das Problem der Erdbeben induzierten Lagergestellverschiebungen und das damit verbundene Risiko der Kollision mit den Wänden des Lagerbeckens oder anderen im Lagerbecken installierten Vorrichtungen in den Griff zu bekommen, hat man versucht die Lagergestelle an den Wänden des Lagerbeckens abzustützen und/oder am Boden des Lagerbeckens zu verankern oder festzuschrauben. In der Vergangenheit sind mehrere Lagerbecken gebaut worden, die auf diesem Fix-Lagergestell-Prinzip basieren. Es hat sich aber schnell gezeigt, dass diesem Fix-Lagergestell-Prinzip Grenzen gesetzt sind. Bei höheren Erdbebenlasten und bei einer höheren Lagerdichte beziehungsweise bei höheren Massen der Lagerstelle entstehen lokal extrem hohe Spitzenlasten an den Verankerungsbeziehungsweise Abstützungsstellen, die zwangsweise zu Beschädigung dieser Strukturen führen würden, insbesondere auch zu Undichtigkeiten in der Auskleidung des Lagebeckens. Aus diesem Grund wurde eine Lösung gesucht, die für höhere Erdbebenlasten und höhere Lagerdichten geeignet ist.

Eine wesentliche Verbesserung dieser Problematik bietet das sogenannte "free sliding"-Prinzip, das sich in den letzten Jahren bei neu erstellten Brennelementlagern durchgesetzt hat. Bei diesem Prinzip sind die Lagergestelle im Lagerbecken frei aufgestellt und können sich beim Erdbeben frei rutschend bewegen. Durch die bei der Bewegung auftretende Reibung wird ein grosser Teil der seismischen Energie vernichtet. Dieses Prinzip erlaubt die Eliminierung der lokal extrem hohen Spitzenlasten an den Verankerungs- beziehungsweise Abstützungsstellen der Lagergestelle, hat aber auch gewisse Nachteile:
- Ein Nachteil ist, dass die Erdbeben induzierten Lagergestellverschiebungen eine gewisse freie Zone rund um die Lagergestelle verlangen. Das ist gleichbedeutend mit einem Verlust an Lagerfläche, die sehr teuer ist.
- Ein weiterer Nachteil besteht darin, dass diese Verschiebungen zur Bildung unterschiedlich grosser, unregelmässiger Abstände zwischen den Lagergestellen führen und dass dadurch nach einem Erdbeben eine unregelmässige Anordnung der Lagergestellen entstehen kann, die zu Problemen bei der späteren Handhabung der eingelagerten Brennelementen führen kann.
- Ein weiterer Nachteil resultiert daraus, dass Lagergestelle, die teilweise und insbesondere einseitig beladen sind, bei hohen horizontalen Erdbebenbeschleunigungen zum Schwanken angeregt werden, wobei die Füsse der Lagergestelle zum Beispiel 10 bis 20 mm vom Boden des Lagerbeckens abheben können. Ein derartiges Schwanken der Lagergestelle erzeugt sehr hohe Aufprallkräfte auf dem Boden des Lagerbeckens, wodurch das Risiko einer Undichtigkeit des Lagerbeckens erheblich erhöht wird. Zudem wird eine verstärkte Tendenz zu Lagergestellverschiebung in Richtung der entlasteten Seite beobachtet, welche die Stabilität der Lagergestelle zusätzlich verschlechtert.

DE 198 29 295 A1 bezieht sich auf ein Brennelement-Lagergestell mit mehreren Schächten zur Aufnahme von Brennelementen, wobei die Schächte in ihrer Bodenplatte eine Öffnung für ein Kühlmedium.

EP-A 0028010 betrifft ein Verfahren und eine Vorrichtung zum Lagern von radioaktivem Abfall, insbesondere von bestrahlten bzw. abgebrannten Brennelementen in Nass- oder Trockenlagern.

US-A 4348352 betrifft ein Lagergestell mit quadratischen Aufnahmeröhren für Brennelemente, wobei die Aufnahmeröhren vertikal angeordnet und formstabil mit einer Bodenplatte verbunden sind.

EP-A-0537615 offenbart ein einzelnes Lagergestell zur Aufnahme von Brennelementen.

Aufgabe der Erfindung ist es, eine Lagergestellanordnung zur Lagerung nuklearer Brennelemente in einem Lagerbecken zur Verfügung zu stellen, die nach dem "free sliding" Prinzip aufgebaut ist, aber die oben beschriebenen Nachteile dieses Prinzips vermeidet oder stark reduziert.

Diese Aufgabe wird erfindungsgemäss durch die in Anspruch 1 definierte Lagergestellanordnung gelöst.

Die erfindungsgemässe Lagergestellanordnung zur Lagerung nuklearer Brennelemente in einem Lagerbecken umfasst mindestens zwei Lagergestelle, die jeweils mehrere vertikale, nebeneinander angeordnete Kanäle zur Aufnahme der Brennelemente enthalten, wobei unten an den Lagergestellen Positionierelemente vorgesehen sind. Zudem sind nebeneinander angeordnete Lagergestelle oben miteinander verbunden, und die Lagergestellanordnung umfasst zusätzlich eine oder mehrere Bodenplatten, die mit Positionierungen versehen sind, welche zu den Positionierelementen der Lagergestelle passen, und welche zusammen mit den Positionierelementen die Lagergestelle bezüglich der Bodenplatte oder Bodenplatten positionieren, insbesondere in horizontaler Richtung positionieren, um ein Verschieben der Lagergestelle auf der oder den Bodenplatten zu verhindern.

In einer vorteilhaften Ausführungsvariante sind die Positionierelemente als Stützelemente, auf denen die Lagergestelle abgestützt sind, ausgebildet und die Positionierungen als Aufnahmen in der oder den Bodenplatten, um die Positionierelemente der Lagergestelle aufzunehmen, und/oder als vorstehende Teile auf der oder den Bodenplatten, wobei die vorstehenden Teile und die Positionierelemente der Lagergestelle ineinandergreifen, um ein Verschieben der Lagergestelle bezüglich der Bodenplatte oder Bodenplatten zu verhindern. In einer weiteren vorteilhaften Ausführungsvariante sind die Stützelemente jeweils mit Abstützungen versehen, beispielsweise mit höhenverstellbaren Abstützungen, um die Lagergestelle auf der oder den Bodenplatten und/oder auf dem Boden des Lagerbeckens abzustützen.

Vorteilhafterweise ist keine feste Verbindung zwischen den Lagergestellen und der oder den Bodenplatten vorgesehen, sondern es sind lediglich Steckverbindungen oder Halterungen vorgesehen, so dass die Lagergestelle einfach platziert und, falls nötig, entfernt werden können. Beispielsweise, indem die Positionierelemente der Lagergestelle jeweils zusammen mit den Positionierungen der Bodenplatte oder Bodenplatten Steckverbindungen oder Halterungen mit jeweils einem gehaltenen Teil bilden, die zum Beispiel durch Absenken der Lagergestelle zusammengefügt werden können, um die Lagergestelle bezüglich der Bodenplatte oder Bodenplatten gegen horizontale Verschiebung zu sichern.

Mit Vorteil sind die Bodenplatte oder Bodenplatten auf dem Boden des Lagerbeckens verschiebbar, so dass mit der Lagergestellanordnung ein Brennelementlager nach dem "free sliding"-Prinzip aufgebaut werden kann.

In einer vorteilhaften Ausführungsform sind nebeneinander angeordnete Lagergestelle jeweils mit mindestens einer gemeinsamen Bodenplatte positioniert und/oder verbunden.

Falls mehrere Bodenplatten verwendet werden, können dieselben am Umfang der Lagergestelle angeordnet sein, beispielsweise im Wesentlichen am gesamten Umfang der Lagergestelle. Die Bodenplatte oder Bodenplatten können sich auch über mindestens 80% der Grundfläche der Lagergestellanordnung erstrecken oder im Wesentlichen über die gesamte Grundfläche der Lagergestellanordnung. Weiter können die Bodenplatte oder Bodenplatten grösser als die Grundfläche eines Lagegestells sein und/oder die Bodenplatte oder Bodenplatten können bezüglich der Lagergestelle vorstehen. In einer vorteilhaften Ausführungsvariante sind die Bodenplatten, unabhängig von der Verbindung der Lagergestelle, miteinander verbunden.

In einer weiteren vorteilhaften Ausführungsform sind die Lagergestelle jeweils mit seitlichen Streben versehen. Fallweise können die Lagergestelle auf jeder Seite mit mindestens drei im Wesentlichen vertikal verlaufenden Streben versehen sein. Vorteilhafterweise sind die Streben benachbarter Lagergestelle in einem oberen Abschnitt und/oder am oberen Ende miteinander verbunden, zum Beispiel mittels Schraubverbindung.

Die erfindungsgemässe Lagergestellanordnung hat den Vorteil, dass die Lagergestelle oben stabil miteinander verbunden sind, während sie unten dank der Positionierungen gegen Verschieben auf der oder den Bodenplatten gesichert sind. Falls auf eine feste Verbindung zwischen den Lagergestellen und der oder den Bodenplatten verzichtet wird, können, falls nötig, einzelne Lagergestelle einfach ausgewechselt werden oder das Lager, falls Platz im Lagerbecken vorhanden ist, erweitert werden. Ein weiterer Vorteil besteht darin, dass die Bodenplatten bei Bedarf auf dem Boden des Lagerbeckens verschiebbar sind, so dass sich die Bodenplatten zusammen mit den Lagergestellen unter seismischen Beschleunigungen als Block beziehungsweise Lagergestellanordnung frei verschieben können. Vorteilhaft ist dabei, dass die Horizontalkomponente von Erschütterungen nicht voll vom Lagerbeckenboden auf die Lagergestellanordnung übertragen wird. Dies gilt insbesondere für die Übertragung der höherfrequenten Anteile der Horizontalkomponente, die durch die hohe Masse der Lagergestellanordnung und die verschiebbare Anordnung derselben stark bedämpft wird. Darüber hinaus werden Spannungen in der Lagergestellanordnung, die durch thermische bedingte Längenänderungen entstehen können, dank der verschiebbaren Anordnung der Lagergestelle auf ein unschädliches Mass begrenzt. Vorteilhaft ist zudem, dass die Bodenplatten bezüglich der Vertikalkomponente von Erschütterungen als hydraulische Dämpfungselemente wirken. Zusätzlich werden das Schwanken sowie Kippbewegungen der einzelnen Lagergestelle durch die Verbindung der Lagergestelle im oberen Teil wirksam bedämpft, indem die Verbindung die Schwingungsamplituden der einzelnen Lagergestelle begrenzt.

Die seismischen Analysen zeigen, dass die Bodenplatten, auf denen die Lagergestelle abgestützt sind, stark dämpfend auf die vertikalen und vor allem auf die horizontalen Bewegungen wirken. Weiter werden durch die Verbindung benachbarter Lagergestelle auch die Verschiebungen der Lagerstellanordnung stark reduziert, da diejenigen Lagergestelle, die teilweise und insbesondere einseitig beladen sind, an die vergleichsweise grosse Masse der übrigen Lagergestelle gekoppelt sind, was den Bewegungsprozess entscheidend bremst.

Die obige Beschreibung von Ausführungsformen und -varianten dient lediglich als Beispiel. Weitere vorteilhafte Ausführungen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen
- Fig. 1: ein Ausführungsbeispiel einer Lagergestellanordnung gemäss vorliegender Erfindung in Seitenansicht,
- Fig. 2A: ein Ausführungsbeispiel eines Lagergestells für eine Lagergestellanordnung gemäss vorliegender Erfindung, schräg von oben gesehen,
- Fig. 2B: das Ausführungsbeispiel nach Fig. 2A schräg von unten gesehen, und
- Fig. 3: ein Ausführungsbeispiel einer Verbindung zum Verbinden von benachbarten Lagergestellen.

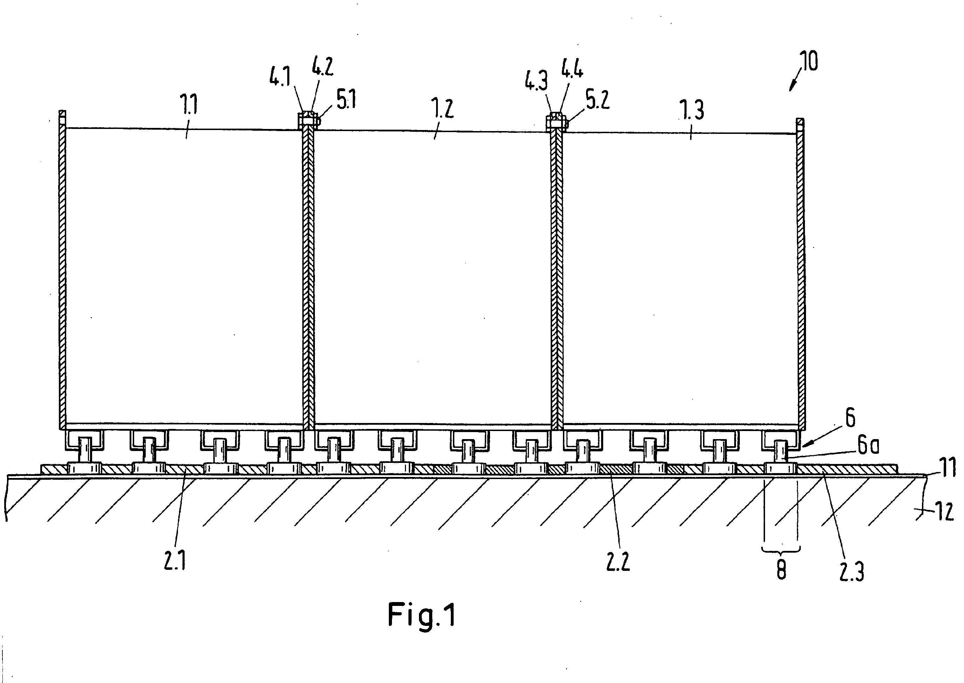

Das in Fig. 1 gezeigte Ausführungsbeispiel einer Lagergestellanordnung 10 zur Lagerung nuklearer Brennelemente in einem Lagerbecken umfasst mindestens zwei Lagergestelle 1.1 - 1.3, die jeweils mehrere vertikale, nebeneinander angeordnete Kanäle zur Aufnahme der Brennelemente enthalten, wobei unten an den Lagergestellen Positionierelemente 6 vorgesehen sind. Zudem sind nebeneinander angeordnete Lagergestelle 1.1 - 1.3 oben miteinander verbunden, und die Lagergestellanordnung 10 umfasst zusätzlich eine oder mehrere Bodenplatten 2.1 - 2.3, die mit Positionierungen 8 versehen sind, welche zu den Positionierelementen 6 der Lagergestelle passen, und welche zusammen mit den Positionierelementen die Lagergestelle bezüglich der Bodenplatte oder Bodenplatten positionieren und insbesondere die horizontale Position der Lagergestelle bezüglich der Bodenplatte oder Bodenplatten festlegen, um ein Verschieben der Lagergestelle auf der oder den Bodenplatten zu verhindern.

Vorteilhafterweise sind keine festen Verbindungen zwischen den Lagergestellen 1.1 - 1.3 und der oder den Bodenplatten 2.1 - 2.3 vorgesehen, sondern Steckverbindungen oder Halterungen, beispielsweise indem die Positionierelemente 6 jeweils zusammen mit der zugehörigen Positionierung 8 als Steckverbindung ausgebildet sind oder als Halterung mit einem zu haltenden Teil. Die Steckverbindungen oder Halterungen mit den jeweiligen zu haltenden Teilen können beim Aufbau der Lagergestellanordnung z.B. durch Absenken der Lagergestelle auf die Bodenplatte oder Bodenplatten zusammengefügt werden, so dass die Lagergestelle bezüglich der Bodenplatte oder Bodenplatten gegen horizontale Verschiebung gesichert sind.

In einer vorteilhaften Ausführungsvariante sind die Positionierelemente 6, wie in Fig. 1 gezeigt, als Stützelemente ausgebildet, auf denen die Lagergestelle 1.1 - 1.3 abgestützt sind, und die Positionierungen 8 als Aufnahmen in der oder den Bodenplatten 2.1 - 2.3 und/oder als vorstehende Teile auf der oder den Bodenplatten. In einer weiteren vorteilhaften Ausführungsvariante sind die Stützelemente 6 jeweils mit Abstützungen 6a versehen, beispielsweise mit höhenverstellbaren Abstützungen, um die Lagergestelle 1.1 - 1.3 auf der oder den Bodenplatten 2.1 - 2.3 und/oder auf dem Boden 12 des Lagerbeckens abzustützen. Mittels der höhenverstellbaren Abstützungen, die beispielsweise ein Gewinde enthalten können, lassen sich Unebenheiten des Lagerbeckenbodens ausgleichen.

Mit Vorteil sind die Bodenplatte oder Bodenplatten 2.1 - 2.3 auf dem Boden 12 des Lagerbeckens verschiebbar, so dass mit der Lagergestellanordnung 10 ein Brennelementlager nach dem "free sliding"-Prinzip aufgebaut werden kann. Fallweise kann auf dem Boden 12 des Lagerbeckens eine Auskleidung 11 vorgesehen sein, auf der die Bodenplatte oder Bodenplatten verschiebbar sind. Die Auskleidung 11 dient zum Abdichten des Lagerbeckens und kann beispielsweise aus Stahl hergestellt sein.

In dem in Fig. 1 gezeigten Ausführungsbeispiel enthält die Lagergestellanordnung 10 drei in einer Richtung aneinander gereihte Lagergestelle 1.1 - 1.3. Es ist jedoch auch möglich zwei oder mehr als drei Lagergestelle aneinanderzureihen, und/oder in einer Richtung senkrecht dazu eine oder mehrere weitere Reihen anzufügen, um eine Lagergestellanordnung der gewünschten Grösse zu bilden.

In einer vorteilhaften Ausführungsform sind nebeneinander angeordnete Lagergestelle 1.1 - 1.3 jeweils mit mindestens einer gemeinsamen Bodenplatte 2.1 - 2.3 positioniert und/oder verbunden. Die Abmessungen der Bodenplatte oder Bodenplatten können weitgehend frei gewählt werden, solange die Positionierung Lagergestell übergreifend ausgelegt ist. In der Praxis kann es vorteilhaft sein, die Bodenplatte oder Bodenplatten so gross zu wählen, dass mittels einer Bodenplatte mindestens zwei nebeneinander liegende Positionierelemente desselben Lagergestells sowie mindestens zwei Positionierelemente eines angrenzenden Lagergestells positioniert werden können.

Falls mehrere Bodenplatten 2.1 - 2.3 verwendet werden, können dieselben am Umfang der Lagergestelle 1.1 - 1.3 angeordnet sein, beispielsweise im Wesentlichen am gesamten Umfang der Lagergestelle. Die Bodenplatte oder Bodenplatten können sich auch über mindestens 80% der Grundfläche der Lagergestellanordnung erstrecken oder im Wesentlichen über die gesamte Grundfläche der Lagergestellanordnung. Weiter können die Bodenplatte oder Bodenplatten grösser als die Grundfläche eines Lagegestells sein und/oder die Bodenplatte oder Bodenplatten können bezüglich der Lagergestelle vorstehen. In einer vorteilhaften Ausführungsvariante sind die Bodenplatten 2.1 - 2.3, unabhängig von der Verbindung der Lagergestelle 1.1 - 1.3, miteinander verbunden.

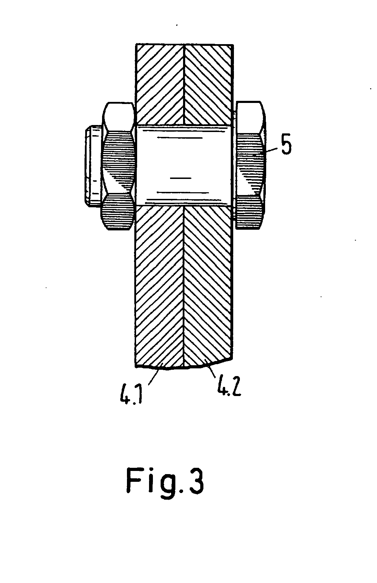

In einer weiteren vorteilhaften Ausführungsform sind die Lagergestelle 1.1 - 1.3 jeweils mit seitlichen Streben 4.1 - 4.4 versehen. Fallweise können die Lagergestelle auf jeder Seite mit mindestens drei im Wesentlichen vertikal verlaufenden Streben versehen sein. Vorteilhafterweise sind die Streben benachbarter Lagergestelle jeweils oben, beispielsweise am oberen Ende und/oder in einem oberen Abschnitt insbesondere einem Abschnitt am oberen Ende, miteinander verbunden, zum Beispiel, wie in Fig. 3 gezeigt, mittels Bolzen oder Schraubverbindungen 5, 5.1, 5.2. Zwei jeweils benachbarte Lagergestelle können oben auch auf andere Weise miteinander verbunden werden. Beispielsweise kann, wenn die Lagergestelle jeweils einen oberen Gitterrost, zum Beispiel in Form einer Gitterplatte oder Abschlussplatte, oder oberen Rahmen enthalten, der obere Gitterrost oder Rahmen des einen Lagergestells mit dem oberen Gitterrost beziehungsweise Rahmen des anderen Lagergestells verbunden werden.

Unabhängig von der Ausführungsform und Ausführungsvariante der Lagergestelle 1.1 - 1.3 können die Bodenplatte oder Bodenplatten 2.1 - 2.3 oder die Stützelemente 6 oder die Abstützungen 6a auf der Unterseite mit einer zusätzlichen Gleitschicht, beispielsweise einer Chromschicht, versehen sein.

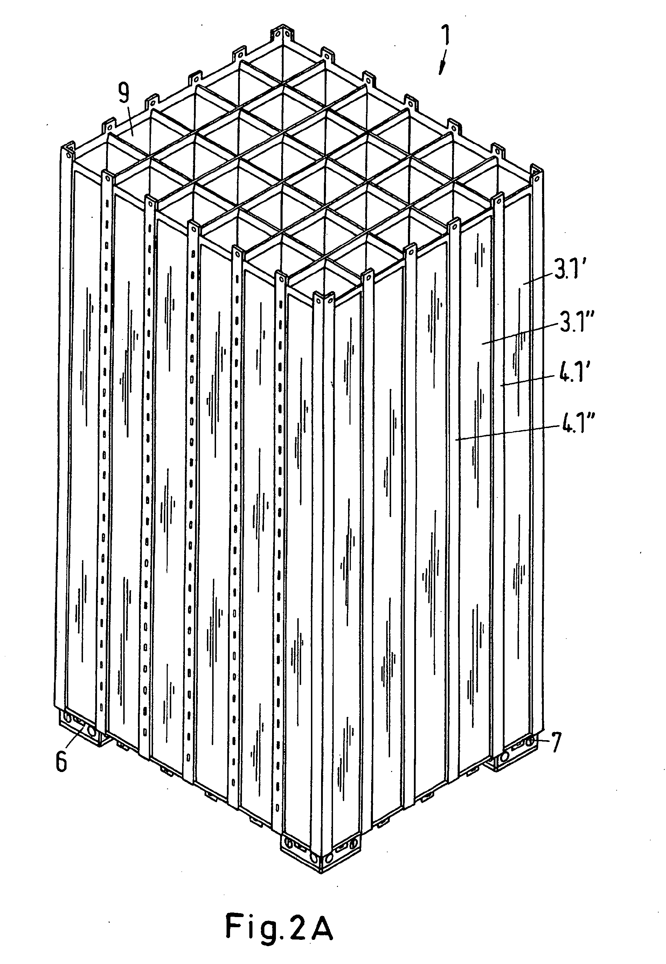

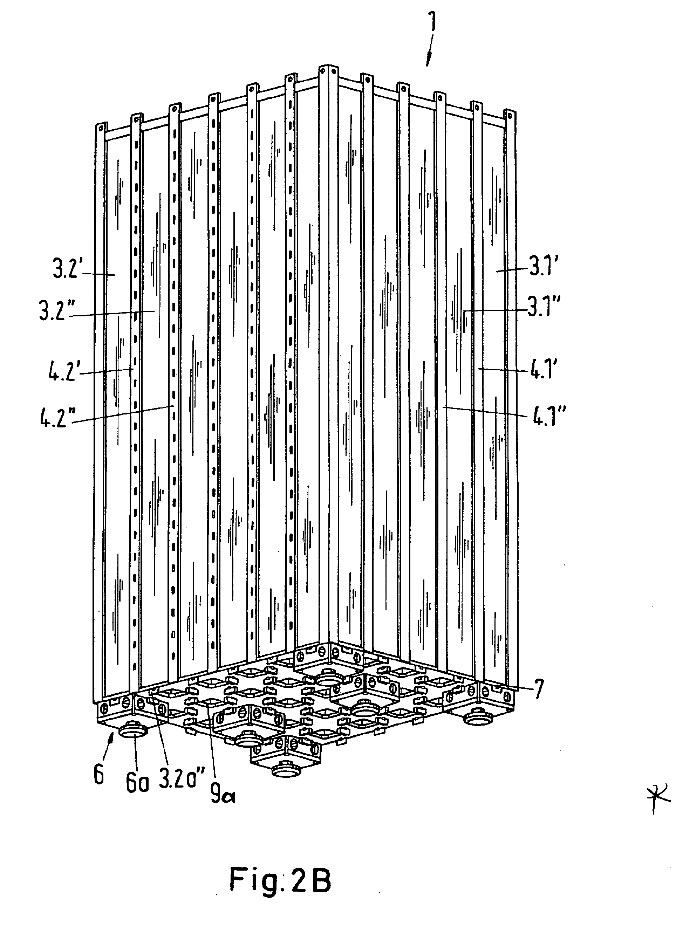

Die Figuren 2A und 2B zeigen ein Ausführungsbeispiel eines Lagergestells für eine Lagergestellanordnung gemäss vorliegender Erfindung, einmal schräg von oben und einmal schräg von unten gesehen. Das Lagergestell 1 umfasst im gezeigten Ausführungsbeispiel eine Kanalstruktur, die mehrere, nebeneinander angeordnete Kanäle 9 mit Wänden 3.1', 3.1", 3.2', 3.2" zur Aufnahme der Brennelemente enthält, und eine Auflageplatte 7, die mit der Kanalstruktur verbunden ist. Weiter kann das Lagergestell 1 beispielsweise Streben 4.1', 4.1",4.2', 4.2" umfassen, die mit der Auflageplatte 7 und dem oberen Teil der Kanalstruktur verbunden sein können. Fallweise sind im oberen Teil der Kanalstruktur ein Gitterrost und/oder eine Abschlussplatte vorgesehen, mit denen die Streben 4.1', 4.1",4.2', 4.2" verbunden sein können. In einer vorteilhaften Ausführungsform sind die Streben 4.1', 4.1",4.2', 4.2" über die gesamte Höhe des Lagergestells mit der Kanalstruktur und/oder mit den Wänden 3.1', 3.1", 3.2', 3.2" der Kanäle verbunden, beispielsweise durchgehend, punktweise oder in regelmässigen Abständen. Dadurch wird die Kanalstruktur bezüglich der Einwirkung von Vertikalkräften stabilisiert und die Streben gegen Knicken gesichert.

In einer weiteren vorteilhaften Ausführungsform sind die Brennelemente bei der Lagerung auf der Auflageplatte 7 abgestützt. Hierzu kann die Auflageplatte 7 mit Durchbrüchen und/oder Schlitzen versehen und an der Kanalstruktur und/oder den Wänden 3.1', 3.1 ", 3.2', 3.2" der Kanäle 9 können jeweils vorstehende Nocken 3.2a" ausgebildet sein, die in oder durch die Durchbrüche beziehungsweise Schlitze der Auflageplatte gesteckt und auf der der Kanalstruktur gegenüberliegenden Seite der Auflageplatte verankert und/oder gegen Herausziehen gesichert sind. Diese Ausführungsform hat den Vorteil, dass die Auflageplatte eine vergleichsweise geringe Materialstärke aufweisen kann, da die Auflageplatte durch die Verbindung mit der Kanalstruktur genügend versteift wird, um das Gewicht der Brennelemente aufzunehmen.

Die Nocken können zum Beispiel, wie in Fig. 2B gezeigt, auf der der Kanalstruktur gegenüberliegenden Seite der Auflageplatte 7 vorstehen und mittels Verriegelungselementen verankert sein, beispielsweise mittels Keilen und/oder geraden oder konischen Bolzen und/oder Splinten. Mit Vorteil sind in der Auflageplatte 7 Zirkulationsöffnungen 9a vorgesehen, damit das im Lagerbecken enthaltene Wasser bei der Lagerung der Brennelement durch die Kanäle 9 strömen kann, um die Brennelemente zu kühlen.

Vorteilhafterweise sind die Kanalstruktur und/oder die Wände 3.1', 3.1", 3.2', 3.2" der Kanäle 9 aus Neutronen absorbierendem Material, wie beispielsweise einer Borlegierung oder Bor dotiertem Stahl, aufgebaut oder enthalten Neutronen absorbierendes Material. Die Kanalstruktur kann bei Bedarf doppelwandig ausgeführt sein.

In einer weiteren vorteilhaften Ausführungsform umfasst das Lagergestell 1 zusätzlich eines oder mehrere Stützelemente 6 zum Abstützen des Lagergestells und/oder der Auflageplatte 7. Die Stützelemente können zum Beispiel an den Nocken der Kanalstruktur ausgerichtet oder zentriert sein. Die Stützelemente 6 sind fallweise aus Blech oder Blechteilen geformt, wobei die seitlichen Bleche oder Blechteile der Stützelemente vorteilhafterweise auf der der Kanalstruktur gegenüberliegenden Seite der Auflageplatte direkt unter den Wänden 3.1', 3.1", 3.2', 3.2" der Kanäle 9 angeordnet sind. Vorteilhafterweise sind die Stützelemente 6 an wählbaren Positionen der Auflageplatte fixierbar, beispielsweise mittels Bolzen und/oder Schrauben. In einer vorteilhaften Ausführungsvariante sind die Stützelemente 6 jeweils mit Abstützungen 6a versehen, beispielsweise mit höhenverstellbaren Abstützungen, um das Lagergestell 1 auf der oder den Bodenplatten und/oder auf dem Boden des Lagerbeckens abzustützen. Die Stützelemente 6 oder die Abstützungen 6a werden mit Vorteil als Positionierelemente verwendet, um das Lagergestell 1 in Bezug auf eine unter dem Lagergestell angeordnete Bodenplatte zu positionieren.

Die erfindungsgemässe Lagergestellanordnung hat den Vorteil, dass sich die Lagergestelle dank der Positionierungen auf der Bodenplatte oder auf den Bodenplatten nicht einzeln gegeneinander verschieben können. Darüber hinaus kann dank der Verbindung der Lagergestelle im oberen Teil und der Positionierungen auf der Bodenplatte oder den Bodenplatten die Erdbebensicherheit der Lagergestellanordnung gegenüber dem eingangs beschriebenen Stand der Technik erhöht werden, indem sowohl die Horizontalkomponente als auch die Vertikalkomponente von Erschütterungen wirksam bedämpft werden.

## Patentansprüche

1. Lagergestellanordnung zur Lagerung nuklearer Brennelemente in einem Lagerbecken, wobei die Lagergestellanordnung (10) mindestens zwei Lagergestelle (1, 1.1 - 1.3) umfasst, die jeweils mehrere vertikale, nebeneinander angeordnete Kanäle (9) zur Aufnahme der Brennelemente enthalten, und wobei unten an den Lagergestellen Positionierelemente (6) vorgesehen sind, **dadurch gekennzeichnet, dass** nebeneinander angeordnete Lagergestelle (1, 1.1 - 1.3) oben miteinander verbunden sind, und dass die Lagergestellanordnung (10) zusätzlich eine oder mehrere Bodenplatten (2.1 - 2.3) umfasst, die mit Positionierungen (8) versehen sind, welche zu den Positionierelementen (6) der Lagergestelle (1, 1.1 - 1.3) passen, und welche zusammen mit den Positionierelementen die Lagergestelle bezüglich der Bodenplatte oder Bodenplatten positionieren, um ein Verschieben der Lagergestelle auf der oder den Bodenplatten zu verhindern.

2. Lagergestellanordnung nach Anspruch 1, wobei die Positionierelemente (6) als Stützelemente ausgebildet sind, auf denen die Lagergestelle (1, 1.1 - 1.3) abgestützt sind, und wobei die Positionierungen (8) als Aufnahmen in der oder den Bodenplatten (2.1 - 2.3) und/oder als vorstehende Teile auf der oder den Bodenplatten ausgebildet sind.

3. Lagergestellanordnung nach einem der Ansprüche 1 oder 2, wobei die Stützelemente (6) jeweils mit Abstützungen (6a) versehen sind, insbesondere mit höhenverstellbaren Abstützungen, um die Lagergestelle (1, 1.1 - 1.3) auf der oder den Bodenplatten (2.1 - 2.3) und/oder auf dem Boden 12 des Lagerbeckens abzustützen.

4. Lagergestellanordnung nach einem der vorangehenden Ansprüche, wobei die Positionierelemente (6) jeweils zusammen mit der zugehörigen Positionierung (8) als Steckverbindung ausgebildet sind oder als Halterung mit einem zu haltenden Teil.

5. Lagergestellanordnung nach einem der vorangehenden Ansprüche, wobei die Bodenplatte oder Bodenplatten (2.1 - 2.3) auf dem Boden (12) des Lagerbeckens verschiebbar sind.

6. Lagergestellanordnung nach einem der vorangehenden Ansprüche, wobei nebeneinander angeordnete Lagergestelle (1.1, 1.2) jeweils mit mindestens einer gemeinsamen Bodenplatte (2.1 - 2.3) positioniert und/oder verbunden sind.

7. Lagergestellanordnung nach einem der vorangehenden Ansprüche, wobei die Bodenplatten (2.1 - 2.3) am Umfang der Lagergestelle (1, 1.1 - 1.3) angeordnet sind, oder wobei im Wesentlichen am gesamten Umfang der Lagergestelle Bodenplatten angeordnet sind.

8. Lagergestellanordnung nach einem der vorangehenden Ansprüche, wobei sich die Bodenplatte oder Bodenplatten (2.1 - 2.3) über mindestens 80% der Grundfläche der Lagergestellanordnung (10) erstrecken oder im Wesentlichen über die gesamte Grundfläche der Lagergestellanordnung.

9. Lagergestellanordnung nach einem der vorangehenden Ansprüche, wobei die Bodenplatte oder Bodenplatten (2.1 - 2.3) grösser als die Grundfläche eines Lagegestells (1, 1.1 - 1.3) sind.

10. Lagergestellanordnung nach einem der vorangehenden Ansprüche, wobei die Bodenplatte oder Bodenplatten (2.1 - 2.3) bezüglich der Lagergestelle (1, 1.1 - 1.3) vorstehen.

11. Lagergestellanordnung nach einem der vorangehenden Ansprüche, wobei die Bodenplatten (2.1 - 2.3), unabhängig von der Verbindung der Lagergestelle (1, 1.1 - 1.3), miteinander verbunden sind.

12. Lagergestellanordnung nach einem der vorangehenden Ansprüche, wobei die Lagergestelle (1, 1.1 - 1.3) jeweils mit seitlichen Streben (4.1 - 4.4, 4.1', 4.1", 4.2', 4.2") versehen sind.

13. Lagergestellanordnung nach einem der vorangehenden Ansprüche, wobei die Lagergestelle (1, 1.1 - 1.3) auf jeder Seite mit mindestens drei im Wesentlichen vertikal verlaufenden Streben (4.1', 4.1", 4.2', 4.2") versehen sind.

14. Lagergestellanordnung nach Anspruch 12 oder 13, wobei die Streben (4.1, 4.2 ; 4.3, 4.4) benachbarter Lagergestelle (1.1 - 1.3) in einem oberen Abschnitt und/oder am oberen Ende miteinander verbunden sind.

15. Lagergestell anordnung nach Anspruch 14, wobei die Streben (4.1, 4.2 ; 4.3, 4.4) benachbarter Lagergestelle (1.1 - 1.3) jeweils mittels Schraubverbindung (5, 5.1, 5.2) miteinander verbunden sind.

## Claims

1. A storage rack assembly for storing nuclear fuel elements in a basin, wherein the storage rack assembly (10) comprises at least two storage racks (1, 1.1-1.3), each comprising plural vertical channels (9) arranged next to each other for receiving the fuel elements, wherein positioning elements (6) are provided below the storage racks, **characterized in that** next to each other arranged storage racks (1, 1.1-1.3) are connected to each other at the top, and the storage rack assembly (10) additionally comprises one or more bottom plates (2.1-2.3), which are provided with positionings (8) matching to the positioning elements (6) of the storage racks (1, 1.1-1.3) and positioning, together with the positioning elements, the storage racks with respect to the bottom plate or the bottom plates for avoiding sliding of the storage racks on the bottom plate or the bottom plates.

2. The storage rack assembly according to claim 1, wherein the positioning elements (6) are provided as support elements on which the storage racks (1, 1.1-1.3) are supported, and wherein the positionings (8) are provided as openings in the bottom plate or the bottom plates (2.1-2.3) and/or as protruding parts on the bottom plate or the bottom plates.

3. The storage rack assembly according to claim 1 or 2, wherein the support elements are provided with bearings (6a) respectively, in particular, with bearings adjustable in height for supporting the storage racks (1, 1.1-1.3) on the bottom plate or the bottom plates (2.1-2.3) and/or the bottom (12) of the basin.

4. The storage rack assembly according to any one of the preceding claims, wherein the positioning element (6) together with the corresponding positioning (8) are provided as plug connection, respectively, or as a carrier having a part to be carried.

5. The storage rack assembly according to any one the preceding claims, wherein the bottom plate or bottom plates (2.1-2.3) are slidable on the bottom (12) of the basin.

6. The storage rack assembly according to any one the preceding claims, wherein next to each other arranged storage racks (1.1, -1.2) are positioned and/or connected to at least one common bottom plate (2.1-2.3), respectively.

7. The storage rack assembly according to any one of the preceding claims, wherein the bottom plates (2.1-2.3) are arranged at the circumference of the storage racks (1, 1-1-1.3), or wherein bottom plates are arranged substantially at the entire circumference of the storage racks.

8. The storage rack assembly according to any one of the preceding claims, wherein the bottom plate or bottom plates (2.1-2.3) extend over at least 80% of the base area of the storage rack assembly (10) or substantially over the entire base area of the storage rack assembly.

9. The storage rack assembly according to any one of the preceding claims, wherein the bottom plate or bottom plates (2.1-2.3) are larger than the base area of a storage rack (1, 1.1-1.3).

10. The storage rack assembly according to any one the preceding claims, wherein the bottom plate or bottom plates (2.1-2.3) protrude with respect to the storage racks (1, 1-1-1.3).

11. The storage rack assembly according to any one the preceding claims, wherein the bottom plates (2.1-2.3) are connected to each other independent from the connection of the storage racks (1, 1-1-1.3).

12. The storage rack assembly according to any one the preceding claims, wherein the storage racks of (1, 1.1-1.3) are provided with lateral braces (4.1-4.4, 4.1', 4.1", 4.2").

13. The storage rack assembly according to any one the preceding claims, wherein the storage racks (1, 1.1-1.3) are provided on each side with at least three substantially vertical extending braces (4.1-4.4, 4.1', 4.1", 4.2").

14. The storage rack assembly according to claim 12 or 13, wherein the braces (4.1, 4.2, 4.3, 4.4) of adjacent storage racks (1.1-1.3) are connected to each other at an upper section and /or upper end.

15. The storage rack assembly according to claim 14, wherein the braces (4.1, 4.2; 4.3, 4.4) of adjacent storage racks (1.1-1.3) are connected to each other by means of screw connection (5, 5.1, 5.2), respectively.

## Revendications

1. Assemblage de châssis de stockage destinés au stockage d'éléments de combustion nucléaire dans une piscine nucléaire, dans lequel l'assemblage de châssis de stockage (10) comprend au moins deux châssis de stockage (1, 1.1-1.3), qui contiennent respectivement plusieurs canaux verticaux (9) agencés l'un à côté de l'autre pour recevoir les éléments de combustion, et dans lequel il est prévu dans la partie inférieure sur les châssis de stockage des éléments de positionnement (6), **caractérisé en ce que** les châssis de stockage (1, 1.1-1.3) agencés l'un à côté de l'autre sont reliés l'un à l'autre au-dessus et **en ce que** l'assemblage de châssis de stockage (10) comprend également une ou plusieurs plaques de base (2.1-2.3), qui sont pourvues d'emplacements (8) qui coïncident avec les éléments de positionnement (6) des châssis de stockage (1, 1.1-1.3) et qui, conjointement avec les éléments de positionnement, positionnent les châssis de stockage par rapport à la plaque ou aux plaques de base afin d'empêcher un déplacement des châssis de stockage sur la ou les plaques de base.

2. Assemblage de châssis de stockage selon la revendication 1, dans lequel les éléments de positionnement (6) sont conformés en éléments d'appui sur lesquels les châssis de stockage (1, 1.1-1.3) s'appuient, et dans lequel les emplacements (8) se présentent sous la forme de logements dans la ou les plaques de base (2.1-2.3) et/ou sous la forme de pièces saillantes sur la ou les plaques de base.

3. Assemblage de châssis de stockage selon l'une quelconque des revendications 1 ou 2, dans lequel les éléments d'appui (6) sont pourvus respectivement de systèmes d'appui (6a), en particulier de systèmes d'appui réglables en hauteur, pour assurer un appui aux châssis de stockage (1, 1.1-1.3) sur la ou les plaques de base (2.1-2.3) et/ou sur le fond (12) de la piscine de stockage.

4. Assemblage de châssis de stockage selon l'une quelconque des revendications précédentes, dans lequel les éléments de positionnement (6) se présentent respectivement conjointement avec l'emplacement correspondant (8) sous la forme d'une liaison d'emboîtement et sous la forme d'un support avec une partie à supporter.

5. Ensemble de châssis de stockage selon l'une quelconque des revendications précédentes, dans lequel la plaque ou les plaques de base (2.1-2.3) peut ou peuvent se déplacer sur le fond (12) de la piscine de stockage.

6. Assemblage de châssis de stockage selon l'une quelconque des revendications précédentes, dans lequel les châssis de stockage (1.1, 1.2) agencés l'un à côté de l'autre sont respectivement positionnés et/ou reliés à au moins une plaque de base commune (2.1-2.3).

7. Assemblage de châssis de stockage selon l'une quelconque des revendications précédentes, dans lequel les plaques de base (2.1-2.3) sont agencées sur le pourtour des châssis de stockage (1, 1.1-1.3) ou dans lequel les plaques de base sont agencées sensiblement sur la totalité de la périphérie des châssis de stockage.

8. Assemblage de châssis de stockage selon l'une quelconque des revendications précédentes, dans lequel la ou les plaques de base (2.1-2.3) s'étend ou s'étendent au moins sur 80 % de la surface de base de l'assemblage de châssis de stockage (10) ou sensiblement sur toute la surface de base de l'assemblage de châssis de stockage.

9. Assemblage de châssis de stockage selon l'une quelconque des revendications précédentes, dans lequel la ou les plaques de base (2.1-2.3) est ou sont plus grandes que la surface de base d'un châssis de stockage (1, 1.1-1.3).

10. Assemblage de châssis de stockage selon l'une quelconque des revendications précédentes, dans lequel la ou les plaques de base (2.1-2.3) fait ou font saillie par rapport aux châssis de stockage (1, 1.1-1-3).

11. Assemblage de châssis de stockage selon l'une quelconque des revendications précédentes, dans lequel les plaques de base (2.1-2.3) sont reliées l'une à l'autre indépendamment de la liaison des châssis de stockage (1, 1.1-1.3).

12. Assemblage de châssis de stockage selon l'une quelconque des revendications précédentes, dans lequel les châssis de stockage (1, 1.1-1.3) sont pourvus respectivement d'étais latéraux (4.1-4.4, 4.1', 4.1", 4.2', 4.2").

13. Assemblage de châssis de stockage selon l'une quelconque des revendications précédentes, dans lequel les châssis de stockage (1, 1.1-1.3) sont pourvus, sur chaque côté, d'au moins trois étais (4.1', 4.1", 4.2', 4.2") s'étendant sensiblement verticalement.

14. Assemblage de châssis de stockage selon la revendication 12 ou 13, dans lequel les étais (4.1, 4.2 ; 4.3, 4.4) de châssis de stockage voisins (1.1-1.3) sont liés l'un à l'autre dans une section supérieure et/ou à l'extrémité supérieure.

15. Assemblage de châssis de stockage selon la revendication 14, dans lequel les étais (4.1, 4.2 ; 4.3, 4.4) de châssis de stockage voisins (1.1-1.3) sont reliés l'un à l'autre respectivement à l'aide d'une liaison à vis (5, 5.1, 5.2).
